# FASCICULE DE BREVET EUROPEEN

(11) **EP 0 509 942 B1**
(45) Date de publication et mention de la délivrance du brevet: **20.07.1994**
(21) Numéro de dépôt: 92420125.4
(22) Date de dépôt: 15.04.1992
(51) Int. Cl.: B04B 9/12, F16M 9/00, D06F 49/06, B04B 7/02

(54) **Machine tournante supportée par une dalle d'inertie**
Auf einer Trägheitsplatte abgestützte Rotationsmaschine
Inertia slab supported rotary machine

(30) Priorité: 16.04.1991 FR 9104904
(43) Date de publication de la demande: 21.10.1992
(73) Titulaire: ROBATEL S.A., F-69740 Genas (FR)
(72) Inventeur: Pignal, Maurice, F-07100 Annonay (FR)
(74) Mandataire: Karmin, Roger

(56) Documents cités:
- FR-A- 2 533 664

## Description

La présente invention a trait aux machines tournant à grande vitesse, telles que les essoreuses, les centrifugeuses et analogues.

On sait que les machines du genre en question comprennent en général un panier monté à rotation à l'intérieur d'une cuve autour d'un axe géométrique vertical ou horizontal. Ce panier comporte souvent un moyeu intérieur qui vient se raccorder à l'arbre de la machine en entourant ainsi l'un au moins des paliers de ce dernier, ce qui permet de rapprocher ce palier du centre de gravité du panier chargé. Mais la présence d'un tel moyeu n'est pas indispensable et comme elle constitue une gène dans certaines applications, on a également réalisé des machines avec panier à fond plat.

Comme la charge renfermée par le panier n'est en pratique jamais parfaitement centrée par rapport à l'axe de celui-ci, la partie tournante de la machine est soumise à des résultantes centrifuges notables qui provoquent des vibrations dont l'amplitude peut parfois atteindre des valeurs gênantes. Un moyen connu qui est décrit dans le brevet français N° 2 533 664 au nom de la Demanderesse consiste à placer une dalle annulaire entourant la machine. Cette dernière lui est rigidement fixée de manière que son plan se situe préférablement au niveau de celui des accélérations non équilibrées auxquelles l'équipage tournant de la machine est soumis en fonctionnement.

Une telle machine comprend certains inconvénients tels que le coût excessif de la construction et sa difficulté de montage qui ne permet pas l'utilisation de la dalle annulaire dans tous les types d'industrie.

L'invention vise à remédier à ces inconvénients en simplifiant considérablement la structure de la machine tout en permettant de réduire les couples de basculement qui apparaissent entre la machine tournante et la dalle de béton ou autre.

La machine tournante suivant l'invention comprend une dalle d'inertie disposée de manière à servir de fond de cuve à la structure et sur laquelle sont disposés les différents dispositifs nécessaires au fonctionnement.

Le dessin annexé, donné à titre d'exemple, permettra de mieux comprendre l'invention, les caractéristiques qu'elle présente et les avantages qu'elle est susceptible de procurer :

Fig. 1 est une coupe transversale d'une centrifugeuse à axe vertical dont le déchargement de la matière solide s'effectue par le haut, équipée d'une dalle d'inertie suivant la présente invention.

Fig. 2 est une vue semblable à celle de fig. 1, mais illustrant une centrifugeuse à axe vertical dont le déchargement de la matière solide s'effectue par le bas.

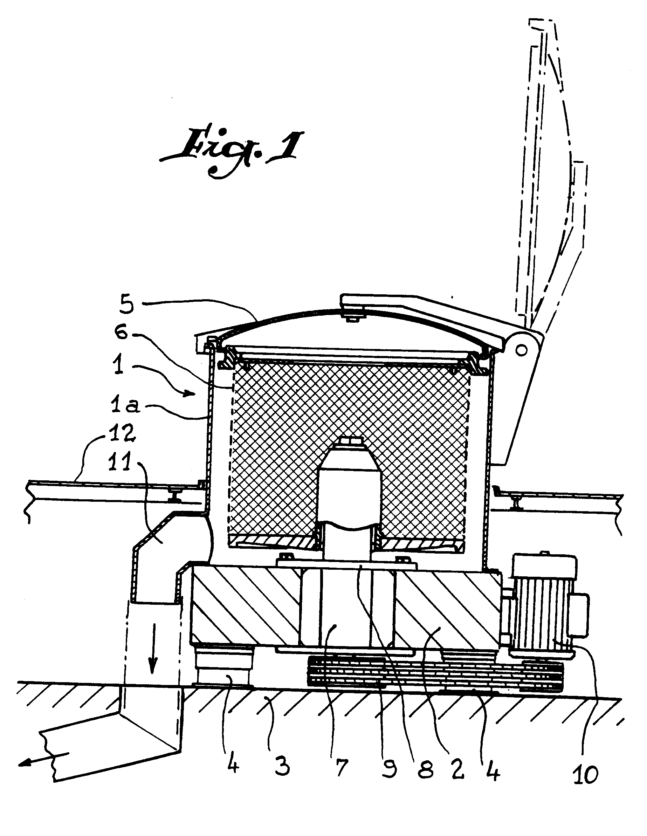

La machine représentée en fig. 1 comprend une cuve fixe 1 dont le bas de la virole 1a est monté de manière étanche sur une dalle d'inertie 2 servant de fond à ladite cuve. La dalle d'inertie 2 de forme circulaire ou rectangulaire repose sur le sol 3 par l'intermédiaire de supports élastiques 4, comme on le verra mieux plus loin, La cuve 1, qui est fermée par un couvercle supérieur 5, comporte dans sa partie interne un panier tournant 6 à fond plat. Ce dernier est supporté par un arbre vertical 7 qui traverse de part en part la dalle d'inertie 2. L'arbre vertical 7 est guidé axialement par un dispositif à palier 8 prévu à l'intérieur de la dalle d'inertie 2 et qui constitue une butée longitudinale, L'extrémité libre de l'arbre 7 débouchant entre le sol 3 et la dalle d'inertie 2 est associée à un système de poulies et courroies 9 qui est entraîné au moyen d'un moteur 10 supporté par l'une des faces latérales de la dalle 2.

Au-dessus du fond de la cuve 1, c'est-à-dire au-dessus de la dalle d'inertie 2, la virole 1a comporte par exemple une goulotte 11 d'évacuation du liquide des produits centrifugés dans le cas d'une machine dont le déchargement de la matière solide s'effectue par le haut, c'est-à-dire par élévation du panier 6.

Dans le plan médian de la machine tournante est disposée une passerelle annulaire 12 permettant aux opérateurs de venir ouvrir ou fermer le couvercle supérieur 5 en vue du chargement ou déchargement des paniers 6.

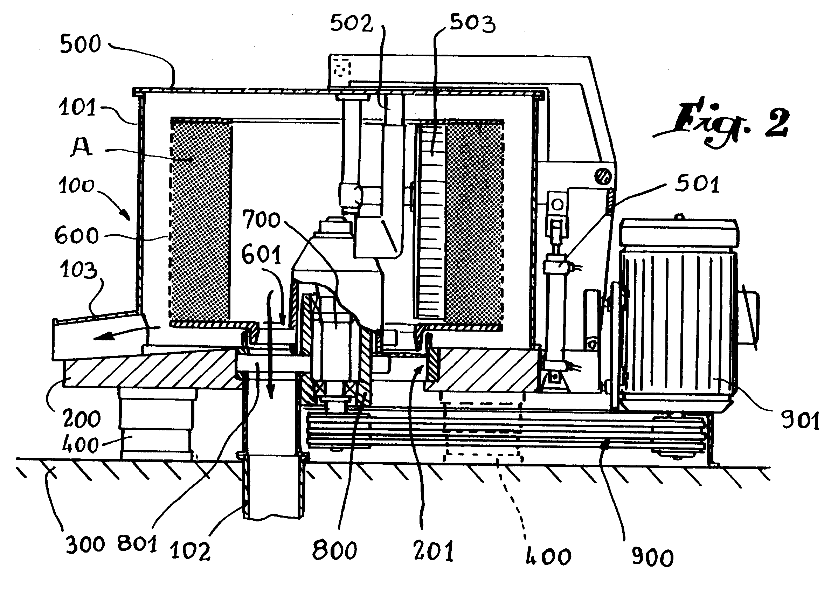

En fig. 2, on a illustré une variante s'appliquant aux centrifugeuses à axe vertical dont le déchargement de la matière solide s'effectue par le bas.

La centrifugeuse comprend une cuve fixe 100 dont le bas de la virole 101 est monté de façon étanche sur une dalle d'inertie 200 servant de fond à ladite cuve. La dalle d'inertie 200 de forme circulaire ou rectangulaire repose sur le sol 300 par l'intermédiaire de supports élastiques 400, comme on le verra mieux plus loin.

A la manière connue, la cuve 100 est fermée par un couvercle supérieur 500 qui est commandé pour son ouverture ou sa fermeture par un dispositif à vérin hydraulique 501. La face interne du couvercle 500 comporte d'une part un tuyau d'alimentation 502 du produit liquide et d'autre part un racloir basculant 503 pour l'élimination du gâteau A obtenu après centrifugation.

A l'intérieur de la cuve 100 est disposé un panier alvéolé 600 comportant dans son fond une série d'ouvertures 601 connues en soi. Le panier 600 est supporté par un arbre vertical 700 qui traverse de part en part la dalle d'inertie 200, l'arbre vertical 700 est guidé axialement par un dispositif à palier 800 qui comporte des bras horizontaux 801 prévus à l'intérieur d'une ouverture annulaire 201 ménagée dans la dalle d'inertie 200. L'extrémité de l'arbre 700 débouchant entre le sol 300 et la dalle d'inertie 200 est associée à un système de poulies et courroies 900 qui est entraîné au moyen d'un moteur 901 supporté par l'une des faces latérales de ladite dalle.

Les ouvertures 601 du panier 600 débouchent à l'intérieur d'une goulotte verticale 102 prévue fixe dans l'ouverture annulaire 201 de la dalle d'inertie 200 en vue de l'évacuation de la matière solide après son raclage.

La virole 101 comporte à proximité de la dalle d'inertie 200 une goulotte 103 sensiblement horizontale pour l'évacuation du liquide des produits centrifugés.

Lorsque les machines représentées en fig. 1 et 2 tournent à grande vitesse, les inévitables défauts d'équilibrage de la charge des paniers 6 et respectivement 600 déterminent des vibrations que les paliers 8, 800 transmettent aux cuves 1, 100, lesquelles les communiquent à leur tour aux dalles d'inertie 2, 200. En raison de la masse très importante de ces dernières, les accélérations que ces vibrations représentent ne leur impartissent que des déplacements horizontaux de très faible amplitude que les tampons 4, 400 encaissent aisément par voie élastique. On note que chacune des machines forme un ensemble monobloc simple de fabrication et de conception, tout en gardant les caractéristiques d'efficacité des machines tournant à grande vitesse.

## Revendications

1. Machine du genre des essoreuses, des centrifugeuses et analogues, comportant une dalle d'inertie et une cuve fixe (1,100), caractérisée en ce que la cuve fixe (1, 100) comporte une virole (1a, 101) qui est montée de manière étanche sur la dalle d'inertie (2, 200) qui constitue le fond de ladite cuve.

2. Machine suivant la revendication 1, caractérisée en ce qu'un dispositif à palier (8) est prévu à l'intérieur de la dalle d'inertie (2) en vue du guidage axial de l'arbre vertical (7) et de son maintien longitudinal.

3. Machine suivant l'une quelconque des revendications 1 et 2, caractérisée en ce que le moteur d'entraînement (10) est fixé sur l'une des faces latérales de la dalle d'inertie (2).

4. Machine suivant l'une quelconque des revendications 1 à 3, caractérisée en ce qu'une goulotte d'évacuation (11) est prévue au-dessus de la dalle d'inertie (2) de manière à évacuer les liquides centrifugés.

5. Machine suivant la revendication 1, caractérisée en ce que la dalle d'inertie (200) comporte une ouverture annulaire (201) permettant la mise en place d'un dispositif à palier (800) et d'une goulotte verticale (102) en vue de l'évacuation de la matière solide.

6. Machine suivant la revendication 1 et 5, caractérisée en ce que le palier (800) comporte des bras horizontaux (801) solidaires de la dalle d'inertie (200).

## Patentansprüche

1. Maschine von der Art eines Trockners, einer Zentrifuge und ähnlichem, die eine Trägheitsplatte und einen feststehenden Behälter (1,100) aufweist,
dadurch **gekennzeichnet**,
daß der feststehende Behälter (1,100) einen Mantel (1a,101) aufweist, der dichtend auf die den Boden dieses Behälters bildende Trägheitsplatte (2,200) montiert ist.

2. Maschine nach Anspruch 1,
dadurch **gekennzeichnet**,
daß eine Lagervorrichtung (8) im Inneren der Trägheitsplatte (2) zur Axialführung der vertikalen Welle (7) und zu deren Längsabstützung vorgesehen ist.

3. Maschine nach Anspruch 1 oder 2,
dadurch **gekennzeichnet**,
daß der Antriebsmotor (10) auf einer der seitlichen Oberflächen der Trägheitsplatte (2) befestigt ist.

4. Maschine nach einem der Ansprüche 1 bis 3,
dadurch **gekennzeichnet**,
daß eine Ablaufrinne (11) so oberhalb der Trägheitsplatte (2) vorgesehen ist, daß die zentrifugierten Flüssigkeiten abgeführt werden.

5. Maschine nach Anspruch 1,
dadurch **gekennzeichnet**,
daß die Trägheitsplatte (200) eine ringförmige Öffnung (201) aufweist, wodurch eine Lagervorrichtung (800) und eine vertikale Rutsche (102) zur Enleerung des festen Materials angebracht werden können.

6. Maschine nach Anspruch 1 und 5,
dadurch **gekennzeichnet**,
daß das Lager (800) horizontale, fest mit der Trägheitsplatte (200) verbundene Schenkel (801) aufweist.

## Claims

1. A machine of the type comprising drying machines, centrifuges and similar apparatus, comprising an inertia slab and a fixed tank (1, 100), characterised in that the fixed tank (1, 100) comprises a hoop (1a, 101) which is mounted hermetically on the inertia slab (2, 200) which forms the base of said tank.

2. A machine according to Claim 1, characterised in that a bearing device (8) is provided on the inside of the inertia slab (2) for the axial guidance of the vertical shaft (7) and for the longitudinal holding thereof.

3. A machine according to any one of Claims 1 and 2, characterised in that the drive motor (10) is fixed to one of the lateral faces of the inertia slab (2).

4. A machine according to any one of Claims 1 to 3, characterised in that an evacuation spout (11) is provided above the inertia slab (2) so as to evacuate the centrifuged liquids.

5. A machine according to Claim 1, characterised in that the inertia slab (200) comprises an annular opening (201) which enables a bearing device (800) and a vertical spout (102) to be put in place for the evacuation of the solid material.

6. A machine according to Claims 1 and 5, characterised in that the bearing (800) comprises horizontal arms (801) integral with the inertia slab (200).
